# EUROPEAN PATENT APPLICATION

(11) **EP 4 607 348 A1**
(43) Date of publication of application: **27.08.2025**
(21) Application number: 25315040.3
(22) Date of filing: 10.02.2025
(51) Int. Cl.: G06F 9/48, G06F 9/54

(54) **PREEMPTION IN AN INTERRUPT DRIVEN MICRO-SCHEDULER TECHNICAL FIELD**

(30) Priority: 23.02.2024 US 202418585393
(71) Applicant: STMicroelectronics International N.V., 1228 Plan-les-Ouates, Geneva (CH)
(72) Inventor: Durand, Jerome, 72100 LE MANS (FR); Le Gall, Christophe, 72470 SAINT-MARS-LA-BRIERE (FR)
(74) Representative: Buzzi, Notaro & Antonielli d'Oulx S.p.A.

(57) **Abstract**

According to an embodiment, a method (200, 500, 600) for scheduling preemption in a multi-core system is proposed. The method includes generating (202) a plurality of task requests, each task request corresponding to a job to be executed by an auxiliary processor (112, 400) and having a respective priority level; storing the plurality of task requests in a shared memory (104); selecting (204) a first task request from the plurality of task requests stored in the shared memory with a highest priority level; communicating (206) the first task request to the auxiliary processor; suspending (208) an execution of a current task in response to receiving the interrupt signal; retrieving (208) the respective priority level of the first task request; adding (208) the first task request and its respective priority level to an execution queue; and executing (210) a task from the execution queue having a highest priority.

## Description

The present disclosure generally relates to microcontrollers and, in particular embodiments, to preemption in an interrupt-driven micro-scheduler.

### BACKGROUND

In system-on-chip (SoC) architectures incorporating multiple cores, it is generally common for embedded real-time operating systems (RTOS) to be designed with multicore multithreading capabilities. Microcontrollers within these systems typically include multiple cores on a single chip, which collectively access shared memory, interface with common peripherals, and utilize a centralized infrastructure.

Utilizing shared memory with dedicated hardware communication mechanisms facilitates the seamless execution of application threads across various embedded cores. However, implementing a multicore multithreading RTOS may not be viable in certain instances where system size constraints exist or where this is a need to continue using legacy RTOS solutions.

An alternative strategy in such multi-core embedded systems involves running a primary application featuring an RTOS on one core while additional cores are relegated to functions of an auxiliary processor. This approach involves remote procedure calls to relieve the main application's core from excessive processing burdens. In traditional configurations, a bidirectional hardware component, such as a mailbox, orchestrates inter-core communications. This setup allows for the transmission of interrupts and small data packets to initiate functional execution from the main processor to the auxiliary processor and vice versa-to indicate the completion of a task.

However, this conventional methodology has limitations, particularly its inability to manage task preemption effectively. Under this system, once a specific function has commenced execution on an auxiliary processor, the procedure must run its course to completion before initiating any new tasks.

### SUMMARY

Technical advantages are generally achieved by embodiments of this disclosure, which describe preemption in an interrupt-driven micro-scheduler.

A first aspect relates to a method for scheduling preemption in a multi-core system. The multi-core system includes a main processor, an auxiliary processor, and a shared memory between the main processor and the auxiliary processor. The method includes generating, by the main processor during an execution of an operating system, a plurality of task requests, each task request corresponding to a job to be executed by the auxiliary processor and having a respective priority level; storing, by the main processor, the plurality of task requests in the shared memory; selecting, by the main processor, a first task request from the plurality of task requests stored in the shared memory with a highest priority level; communicating, by the main processor, the first task request to the auxiliary processor. The communicating includes communicating the respective priority level of the first task request to the auxiliary processor, storing information related to the first task request in the shared memory, and communicating an interrupt signal to the auxiliary processor as a function of the first task request. The method further includes suspending, by the auxiliary processor, an execution of a current task in response to receiving the interrupt signal; retrieving, by the auxiliary processor, the respective priority level of the first task request; adding, by the auxiliary processor, the first task request and its respective priority level to an execution queue; and executing, by the auxiliary processor, a task from the execution queue having a highest priority.

A second aspect relates to a multi-core system. The multi-core system includes a non-transitory memory storage comprising instructions and a multi-core processor in communication with the non-transitory memory storage. The multi-core processor includes a main processor, an auxiliary processor, and a shared memory between the main processor and the auxiliary processor. The multi-core processor is configured to execute the instructions to generate, by the main processor during an execution of an operating system, a plurality of task requests, each task request corresponding to a job to be executed by the auxiliary processor and having a respective priority level; store, by the main processor, the plurality of task requests in the shared memory; select, by the main processor, a first task request from the plurality of task requests stored in the shared memory with a highest priority level; communicate, by the main processor, the first task request to the auxiliary processor, wherein the communicating comprises: communicate the respective priority level of the first task request to the auxiliary processor, store information related to the first task request in the shared memory, and communicate an interrupt signal to the auxiliary processor as a function of the first task request; suspend, by the auxiliary processor, an execution of a current task in response to receiving the interrupt signal; retrieve, by the auxiliary processor, the respective priority level of the first task request; add, by the auxiliary processor, the first task request and its respective priority level to an execution queue; and execute, by the auxiliary processor, a task from the execution queue having a highest priority.

A third aspect relates to a non-transitory computer-readable media storing computer instructions for scheduling preemption in a multi-core system. The multi-core system includes a main processor, an auxiliary processor, and a shared memory between the main processor and the auxiliary processor. The instructions, when executed by the multi-core system, comprise: generating, by the main processor during an execution of an operating system, a plurality of task requests, each task request corresponding to a job to be executed by the auxiliary processor and having a respective priority level; storing, by the main processor, the plurality of task requests in the shared memory; selecting, by the main processor, a first task request from the plurality of task requests stored in the shared memory with a highest priority level; communicating, by the main processor, the first task request to the auxiliary processor, wherein the communicating comprises: communicating the respective priority level of the first task request to the auxiliary processor, storing information related to the first task request in the shared memory, and communicating an interrupt signal to the auxiliary processor as a function of the first task request; suspending, by the auxiliary processor, an execution of a current task in response to receiving the interrupt signal; retrieving, by the auxiliary processor, the respective priority level of the first task request; adding, by the auxiliary processor, the first task request and its respective priority level to an execution queue; and executing, by the auxiliary processor, a task from the execution queue having a highest priority.

Embodiments can be implemented in hardware, software, or any combination thereof.

### BRIEF DESCRIPTION OF THE DRAWINGS

For a more complete understanding of the present disclosure and the advantages thereof, reference is now made to the following descriptions taken in conjunction with the accompanying drawings, in which:
- Figure 1 is a block diagram of an embodiment multi-core system;
- Figure 2 is a flow chart of an embodiment method to operate a multi-core processor for scheduling preemption with the multi-core system of Figure 1;
- Figure 3 is a block diagram of an embodiment main processor, which may be implemented as a main processor in the multi-core system of Figure 1;
- Figure 4 is a block diagram of an embodiment auxiliary processor, which may be implemented as an auxiliary processor in the multi-core system of Figure 1;
- Figure 5 is a flow chart of an embodiment method to operate the main processor of Figure 3 for scheduling preemption with the multi-core system of Figure 1;
- Figure 6 is a flow chart of an embodiment method to operate the auxiliary processor of Figure 4 for scheduling preemption with the multi-core system of Figure 1; and
- Figure 7 is a timing diagram of an example preemption scheduling for three job priorities.

### DETAILED DESCRIPTION OF ILLUSTRATIVE EMBODIMENTS

This disclosure provides many applicable inventive concepts that can be embodied in a wide variety of specific contexts. The particular embodiments are merely illustrative of specific configurations and do not limit the scope of the claimed embodiments. Features from different embodiments may be combined to form further embodiments unless noted otherwise. Various embodiments are illustrated in the accompanying drawing figures, where identical components and elements are identified by the same reference number, and repetitive descriptions are omitted for brevity.

Variations or modifications described in one of the embodiments may also apply to others. Further, various changes, substitutions, and alterations can be made herein without departing from the spirit and scope of this disclosure as defined by the appended claims.

While the inventive aspects are described primarily in the context of a dual-core processor, it should also be appreciated that these inventive aspects may also apply to any multi-core system.

One conventional way to address the limitations of inter-core function execution in multi-core system-on-chip (SoC) configurations is by employing a multi-core, multi-threading real-time operating system (RTOS). This type of RTOS is designed to efficiently and effectively distribute processing tasks across multiple cores, allowing for simultaneous thread execution on different cores within the microcontroller. Multi-threading capabilities are intended to optimize the use of system resources, ensuring that each core can perform concurrent tasks without idle time, thus improving overall system performance. The multi-threading feature also enables the RTOS to handle preemption, suspending a currently running task in favor of a higher-priority task. However, this solution comes at a cost. Implementing such a sophisticated RTOS can lead to a large system footprint due to the comprehensive functionality required for managing multiple threads and cores. Additionally, the overhead associated with task switching can be significant, particularly regarding time delays and resource consumption, which could offset the performance benefits in systems where resources are at a premium.

The second conventional approach involves a multi-core solution employing classic remote procedure calls (RPC). In this context, one of the cores is designated as the primary processor running the main application and RTOS, while the other cores function as auxiliary processors that handle specific tasks delegated to them by the main processor. Communication between the main processor and auxiliary processors typically occurs through predefined protocols that facilitate the execution of function calls remotely. This method allows for a division of labor among the cores and can offload tasks from the main processor to optimize its performance. However, the primary drawback of this solution is the absence of effective preemption management between the cores. When a task is dispatched to an auxiliary processor, it typically needs to be fully executed before another task can commence, leaving no room for interrupting an ongoing task in response to higher-priority demands. This lack of preemption control can lead to inefficiencies, particularly in scenarios that require dynamic task prioritization.

In embodiments, a proposed solution introduces a refined mechanism to enhance the collaboration between a main processor (core) and an auxiliary processor (core) within a multi-core system. This mechanism is designed to offload function executions to the auxiliary processor while considering the priority of the task requests originating from the main processor. A dedicated circuit on the main processor aggregates incoming task requests into an organized list. The earliest request is dispatched to the auxiliary processor through a mailbox communication system for each distinct priority level represented within this list. Upon receiving a message, the auxiliary processor activates a software interrupt that corresponds with the priority level of the request. This software interrupt triggers the execution of the relevant function on the auxiliary processor.

The proposed system provides flexibility in how software interrupts are managed-they can be interleaved, allowing for interruptions and preemptions based on priority levels, or they can be processed sequentially for simpler execution patterns.

After the auxiliary processor has completed the function execution, it communicates the results back to the main processor. Should additional pending requests of the same priority level be waiting on the main processor, the process iterates by dispatching the next request to the auxiliary processor for execution, thereby creating an efficient cycle of task processing that respects the priority order of the original task requests. These and additional details are further detailed below.

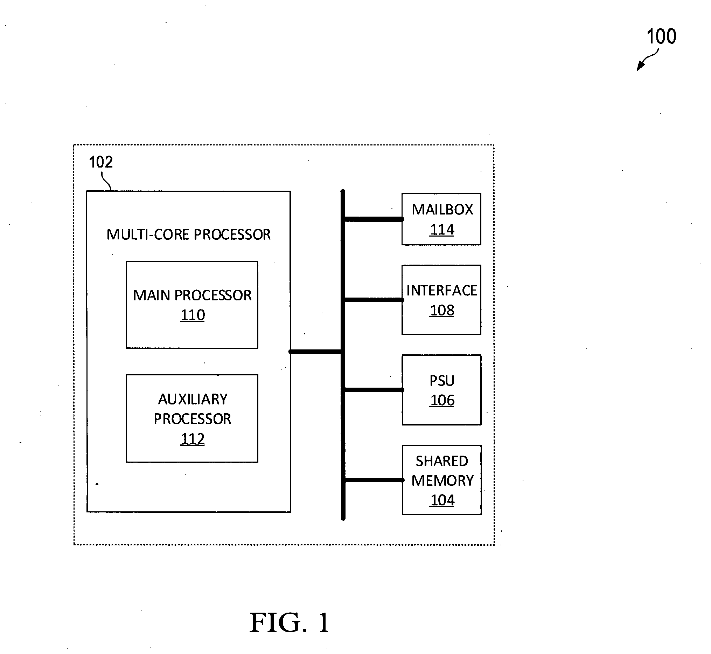

Figure 1 illustrates a block diagram of an embodiment multi-core system 100. Multi-core system 100 includes a multi-core processor 102, a shared memory 104, a power supply unit (PSU) 106, and an interface 108, which may (or may not) be arranged as shown. Although one of each (i.e., the multi-core processor 102, the shared memory 104, the power supply unit 106, and the interface 108) is shown in Figure 1, the number of components is not limiting, and greater numbers are similarly contemplated in other embodiments.

Multi-core system 100 may include additional components not depicted, such as long-term storage (e.g., non-volatile memory, etc.), power management circuitry, security and encryption modules (e.g., trusted platform modules (TPM), etc.), or the like. Multi-core system 100 may be an electronic device, such as a smartphone, a tablet, a laptop, a smartwatch, a vehicle, or any system or sub-system that can benefit from a multi-core processor.

Multi-core processor 102 may be any component or collection of components adapted to perform computations or other processing-related tasks. In embodiments, multi-core processor 102 is an application processor or a microcontroller.

As shown, multi-core processor 102 is a dual-core processor having a main processor 110 and an auxiliary processor 112. However, the number of processors of multi-core processor 102 is non-limiting, and greater numbers are contemplated in other embodiments. In such embodiments, multi-core processor 102 may have a single main processor, as shown in Figure 1, or several main processors. In such embodiments, the remaining processors of the multi-core processor 102 are called auxiliary or co-processors.

Multi-core system 100 additionally includes a mailbox 114. In embodiments, mailbox 114 is a bidirectional hardware circuit configured to signal an interrupt while transmitting data alongside the interrupt signal. This signaling mechanism works through interrupt lines (e.g., physical lines) that couple the mailbox 114 to the main processor 110 and auxiliary processor 112.

In multi-core processor 102, a scheduler manages the execution of tasks in both time and priority, ensuring that processes are executed smoothly and efficiently across the auxiliary processors. Further, a Remote Procedure Call (RPC) in main processor 110 provides the ability to execute a function on a remote host as local, facilitating distributed computing across different systems or components. Shared memory 104 may be any component or collection of components adapted to store programming or instructions for execution by multi-core processor 102. In an embodiment, shared memory 104 includes a non-transitory computer-readable medium. In embodiments, shared memory 104 is a shared memory between each core of the multi-core processor 102. In embodiments, shared memory 104 is a local memory embedded within the multi-core processor 102.

Power supply unit 106 may be any component or collection of components that provide power to one or more components within the multi-core system 100. Power supply unit 106 may include various power management circuitry, charge storage components (i.e., battery), or the like.

Interface 108 may be any component or collection of components that allow multi-core processor 102 to communicate with other devices/components or a user. For example, interface 108 may be adapted to allow users to interact/communicate with the multi-core system 100. In embodiments, each component can communicate with any other component internally within or external to the multi-core system 100. For example, each component can communicate using the I2C (Inter-Integrated Circuit), alternatively known as I2C or IIC, communication protocol, the I3C (Improved Inter Integrated Circuit) communication protocol, the serial peripheral interface (SPI) specification, or the like.

In embodiments, each core of the multi-core processor 102 is configured to have access to shared memory (e.g., shared memory 104), shared peripherals, and infrastructure through the interface 108.

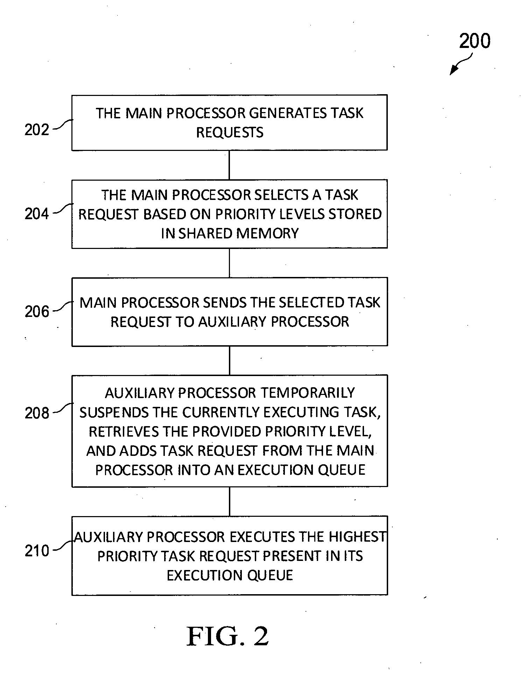

Figure 2 illustrates a flow chart of an embodiment method 200 to operate the multi-core processor 102 for scheduling preemption with the multi-core system 100. It is noted that not all steps outlined in method 200 are necessarily required and can be optional. Further, changes to the arrangement of the steps, removal of one or more steps and path connections, and addition of steps and path connections are similarly contemplated.

In method 200, the preemption schedule is spread between main processor 110 and auxiliary processor 112. In embodiments, main processor 110 manages incoming offload requests from the operating system's tasks. Main processor 110 sorts each request and subsequently determines its routing. If a new request of identical priority is not currently pending, main processor 110 dispatches it to auxiliary processor 112. Conversely, if a request of the same priority has been previously issued, the main processor 110 retains the new request, postponing its transmission until it can be appropriately handled.

Meanwhile, auxiliary processor 112 operates in tandem, empowered by an integrated interrupt service routine. This routine is responsive to requests from main processor 110 to maintain efficient operations. Upon receiving a request, auxiliary processor 112 swiftly triggers the execution of the correspondingly offloaded function. This arrangement of task distribution between the two processors enhances processing efficiency and promotes a more balanced utilization of system resources.

At step 202, the main processor 110, during the execution of its operating system, generates task requests. Each task request is assigned a certain priority level. In embodiments, the generated task requests are stored in shared memory 104.

At step 204, the main processor 110 selects a task request based on priority levels stored in shared memory 104, with preference given to those of the highest priority. At step 206, the main processor 110 sends the selected task request to the auxiliary processor 112. In embodiments, the main processor 110 sends task requests to the auxiliary processor 112 only if an available slot exists in shared memory 104.

In embodiments, step 206 includes sending the priority level of the selected task request to the auxiliary processor 112, storing the data about the task request in shared memory 104, and sending an interrupt from the main processor 110 to the auxiliary processor 112.

In embodiments, the main processor 110 sends the priority level of the selected task request to the auxiliary processor 112 by writing in a register of the mailbox 114. In embodiments, the main processor 110 sends the priority level of the selected task request to the auxiliary processor 112 by writing to a dedicated slot within shared memory 104.

In embodiments, data for selected tasks is stored in slots associated with their indicated priority levels. In embodiments, the interrupt is sent by the mailbox 114 to auxiliary processor 112. In embodiments, the interrupt is sent through a direct interrupt line between the main processor 110 and the auxiliary processor 112.

At step 208, the auxiliary processor 112, in response to receiving the interrupt, temporarily suspends the currently executing task, retrieves the provided priority level, and adds the task request from the main processor 110 into an execution queue, associating it with its particular priority level.

In embodiments, the auxiliary processor 112 retrieves the priority level by reading the register of mailbox 114. In embodiments, the auxiliary processor 112 retrieves the priority level by reading from the dedicated slot of shared memory 104.

At step 210, the auxiliary processor 112 executes the highest priority task request present in its execution queue. In embodiments, when the highest priority task is to be executed, data for this task is retrieved from a dedicated slot within shared memory 104 corresponding to its priority level.

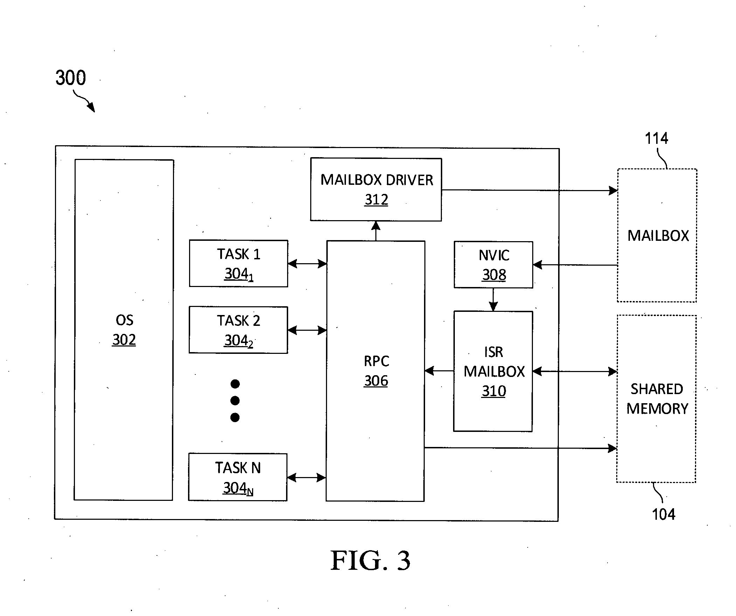

Figure 3 illustrates a block diagram of an embodiment main processor 300, which may be implemented as main processor 110 in multi-core system 100. This figure delineates various instruction sets, intellectual properties (IP), and tasks as constituent elements of main processor 300, thereby facilitating an understanding of its functional capabilities. It should be noted that these elements, while potentially realized in the form of physical circuits (hardware components), may also be embodied as instruction sets executed by a processing circuit in certain embodiments. Main processor 300 may include additional components not shown, and the arrangement of the components in Figure 3 may differ from that shown in other embodiments.

Main processor 300 operates under the control of an operating system (OS) 302, which orchestrates the execution of programs by managing resources such as the shared memory 104, processing time, and input/output operations.

In embodiments, OS 302 is a multithreading real-time operating system (RTOS). In environments that require high reliability and timely response to external events, main processor 300 may utilize a specialized type of OS known as the RTOS. An RTOS is optimized for managing concurrent threads and executing tasks within strict time constraints, guaranteeing a predictable behavior under specific conditions. It prioritizes tasks based on their urgency, handles interruptions with minimal latency, and provides a robust framework for applications where timing is critical.

As shown, main processor 300 is configured to execute *N* number of tasks 304₁, 304₂, 304_{N}, where *N* is a number greater than one. OS 302 is adept at managing the *N* number of tasks 304₁, 304₂, and 304_{N} that are distributed among one or more auxiliary processors 112 of multi-core system 100 to maximize efficiency and performance.

Each auxiliary processor 112 is designated one or more tasks from the pool of *N* number of tasks 304₁, 304₂, 304_{N}, ensuring that load balancing is maintained across the one or more auxiliary processors 112 to prevent bottlenecks and optimize throughput based on, for example, the job priority associated with the task 304 to be executed.

OS 302 schedules these tasks based on priority and real-time requirements, enabling simultaneous execution of multiple threads and effectively utilizing the multi-core architecture of the multi-core system 100. This distribution mechanism ensures that high-priority tasks are promptly serviced while lower-priority tasks are queued appropriately. Moreover, inter-processor communication protocols are employed to facilitate synchronization and data sharing among one or more auxiliary processors 112 and the shared memory 104, ensuring a cohesive operation.

By allocating a task 304 to an auxiliary processor 112, the multi-core system 100, under the guidance of OS 302, achieves enhanced parallel processing capabilities, leading to a significant improvement in response times and overall system reliability for time-sensitive applications.

Main processor 300 includes a Remote Procedure Call (RPC) 306. RPC 306 allows a program to execute a procedure (a subroutine or a set of instructions) on the auxiliary processor 112 as if it were a local call within its own address space. It abstracts the complexities of the multi-core system 100 by allowing developers to interact with remote functions as though they are local to OS 302. OS 302 can delegate one or more of the *N* number of tasks 304₁, 304₂, 304_{N} to one or more auxiliary processors 112 by invoking the RPC 306. RPC 306 leverages the multiple cores of the multi-core system 100 effectively, distributing tasks and ensuring efficient parallel processing. Consequently, deploying an RTOS in multi-core system 100 ensures that time-sensitive tasks receive the attention they require in a consistent and deterministic fashion, making multi-core system 100 ideal for critical applications in sectors like aerospace, medical devices, and embedded systems.

A nested vector interrupt controller (NVIC) 308 couples the main processor 300 to the mailbox 114. An NVIC is a common component in interrupt-handling architectures within, for example, ARM Cortex-M microcontrollers. NVIC 308 manages interrupt and exception handling, enabling priority-based and low-latency interrupt processing.

The nested nature of NVIC 308 allows for prioritizing interrupts, meaning that more critical interrupts can preempt less critical ones, thus ensuring that high-priority tasks receive immediate attention from the multi-core processor 102. Multiple priority levels, managed by the NVIC 308, facilitate fine-grained control over interrupt handling, providing the flexibility to service a wide range of system interrupts efficiently.

The vector part of the name refers to a table of pointers to the respective interrupt service routines, which the NVIC 308 uses to direct the response of the multi-core system 100 to an interrupt. This table is populated with the memory addresses of these service routines, allowing for a rapid and organized response when an interrupt occurs.

Interrupt Service Routine (ISR) mailbox 310 is a programming construct that handles inter-process or inter-thread communications in response to interrupts efficiently. When an interrupt occurs, Interrupt Service Routine (ISR) mailbox 310 is executed to address the event that triggered the interrupt quickly. Interrupt Service Routine (ISR) mailbox 310 facilitates efficient communication between fast, high-priority interrupt handling and slower, low-priority background processing tasks within the multi-core system 100.

Mailbox driver 312 is another software component that orchestrates inter-processor or inter-core communications. Mailbox driver 312 manages mailbox 114, which is used for synchronized and orderly messaging between different components of the multi-core system 100 or between disparate software components. Mailbox driver 312 relies on an interrupt service routine (ISR) that activates when a new message arrives. The ISR quickly handles the interrupt by reading the message and potentially queuing it for processing in other system parts.

Mailbox driver 312 can be responsible for initialization, setting up the hardware or preparing data structures for mailbox 114. This may include configuring any required interrupts and ensuring mailbox 114 is primed for data exchange. Once operational, the mailbox driver 312 offers functionality to send or post messages. This means placing data into the mailbox 114, which is queued for delivery to another auxiliary processor 112. Further, mailbox driver 312 can facilitate the receipt and extraction of messages from mailbox 114. This involves monitoring incoming data and retrieving it so that the appropriate component can process it effectively.

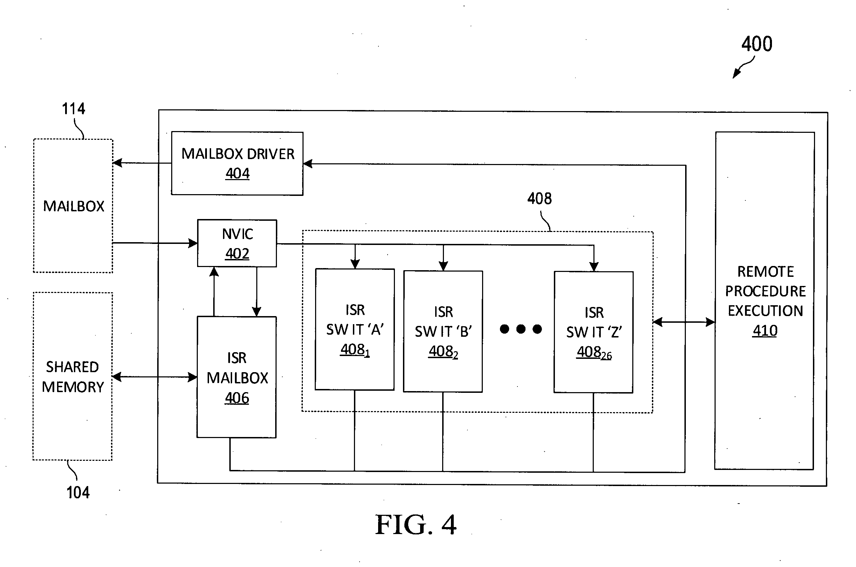

Figure 4 illustrates a block diagram of an embodiment auxiliary processor 400, which may be implemented as auxiliary processor 112 in multi-core system 100. This figure delineates various instruction sets, intellectual properties (IP), and tasks as constituent elements of auxiliary processor 400 to facilitate an understanding of its functional capabilities. It should be noted that these elements, while potentially realized in the form of physical circuits (hardware components), may also be embodied as instruction sets executed by a processing circuit in certain embodiments. Auxiliary processor 400 may include additional components not shown, and the arrangement of the components in Figure 4 may differ from that shown in other embodiments. For brevity of the discussion, a description of components common to Figures 3 and 4 has not been reiterated.

NVIC 402 is a dedicated interrupt controller of the auxiliary processor 400, which couples the auxiliary processor 400 to the mailbox 114. In embodiments, each auxiliary processor 400 includes a dedicated NVIC. When a hardware interrupt occurs, a pulse is generated on one of the interrupt lines. It prompts the auxiliary processor 400 (or one of the respective auxiliary processors in the multi-core system 100) to branch to a specific Interrupt Service Routine (ISR). The ISR is a vector the auxiliary processor 400 calls into when an interrupt is detected. On the other hand, a software interrupt is a forced state within NVIC 402 that serves to mimic the behavior of a hardware interrupt, thus allowing the multi-core processor 102 to simulate the same handling mechanisms for testing or other purposes without an actual hardware signal.

Like the main processor 300, the auxiliary processor 400 includes a dedicated mailbox driver 404 and an ISR mailbox 406.

Depending on the number of priority levels assigned within the multi-core system 100, the auxiliary processor 400 includes the same number of interrupt service routine (ISR) software interrupts (SW IT) 408₁ ... 408_{K}, where K is a number greater than 1-here, *K* is shown to be equal to 26. ISR SW IT 408₁ ... 408_{K} is an interrupt triggered by software actions or conditions.

For example, in a multi-core system 100 with three levels of priority (e.g., priority A, priority B, priority C), the auxiliary processor includes three different ISR SW IT (e.g., ISR SW IT 'A', ISR SW IT 'B', and ISR SW IT 'C').

The remote procedure execution circuit 410 executes the task assigned to the auxiliary processor 400 from the main processor 300 based on the priority level, in accordance with the method described herein.

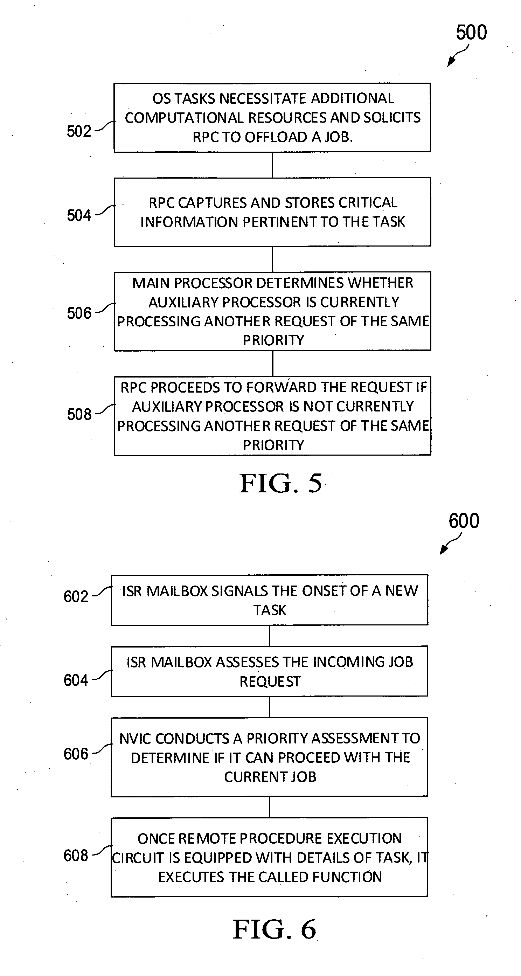

Figure 5 illustrates a flow chart of an embodiment method 500 to operate the main processor 300 for scheduling preemption with the multi-core system 100. It is noted that not all steps outlined in method 500 are necessarily required and can be optional. Further, changes to the arrangement of the steps, removal of one or more steps and path connections, and addition of steps and path connections are similarly contemplated.

At step 502, when OS 302 tasks necessitate additional computational resources, it solicits RPC 306 to offload a job. This offloading request signifies the start of a multi-step job delegation protocol managed by RPC 306.

At step 504, after receiving a request, RPC 306 captures and stores critical information pertinent to the task. This includes the priority level inherited from the originating task 304, which will dictate the processing priority on the auxiliary processor 400. Additionally, it retains a function pointer for the job to be executed, pointers to the input and output parameters of that function, and a unique identifier. This unique identifier is derived from a combination of the priority of task 304 and the sequence number among the requests, ensuring unambiguous recognition of each job.

At step 506, before any requests are transmitted, main processor 300 determines whether auxiliary processor 400 is currently processing another request of the same priority. This preemptive check aims to prevent priority conflicts and resource contention.

At step 508, RPC 306 proceeds to forward the request if auxiliary processor 400 is not currently processing another request of the same priority. The transfer request involves two actions: first, copying the previously stored information-including the function pointer, I/O parameter pointers, and the unique ID-into a designated element within a table in shared memory 104. The positioning within this table correlates with the request's priority level, upholding an organized structure where each element corresponds to and supports a unique priority level.

Second, it involves writing the priority into a dedicated register of the mailbox 114. This action instigates the ISR mailbox 310, targeting the auxiliary processor 400, thereby notifying it of the new task awaiting its computation resources.

Figure 6 illustrates a flow chart of an embodiment method 600 to operate the auxiliary processor 400 for scheduling preemption with the multi-core system 100. It is noted that not all steps outlined in method 600 are necessarily required and can be optional. Further, changes to the arrangement of the steps, removal of one or more steps and path connections, and addition of steps and path connections are similarly contemplated.

At step 602, ISR mailbox 406 signals the onset of a task 304. Upon activation by the RPC 306, as described previously, mailbox 114 generates a hardware interrupt within NVIC 402 directed at the auxiliary processor 400. As a direct consequence, the ISR mailbox 406 is invoked.

At step 604, ISR mailbox 406 assesses the incoming job request. This is achieved by accessing the register of mailbox 114, where mailbox registers can include the priority level or an index to retrieve the priority level from shared memory. The ISR mailbox 406 retrieves the priority level assigned to the job. With this information in hand, ISR mailbox 406 takes proactive steps to promote the request for processing by generating a software interrupt within the NVIC 402. This can be accomplished by writing a 'pending' status for the interrupt corresponding to the retrieved priority level.

At step 606, NVIC 402 conducts a priority assessment to determine if it can proceed with the current job. In scenarios where no other job of a higher priority level is already underway on the auxiliary processor 400, NVIC 402 invokes the designated ISR SW IT 408 tied to the specific software interrupt associated with that job.

The ISR SW IT 408 that responds to this particular software interrupt has a specific purpose. Its primary function is to retrieve the stored context of the offloading request, including the function pointer and pointers to the input and output parameters for that function.

At step 608, once remote procedure execution circuit 410 is equipped with these details, it executes the called function, fulfilling the original offloading directive issued by the main processor 300. This sequence ensures that job requests are handled efficiently and by their assigned priorities, facilitating smooth operation and resource management on the auxiliary processor 400.

Before executing methods 500 and 600, the system is initialized by configuring NVIC 402. NVIC 402 is configured by enabling 'N' vectors, each assigned ascending priorities for differentiated handling of system events. Alongside these vectors, one additional mailbox vector is set up with the highest priority-higher priority than the ISR associated with the preemption.

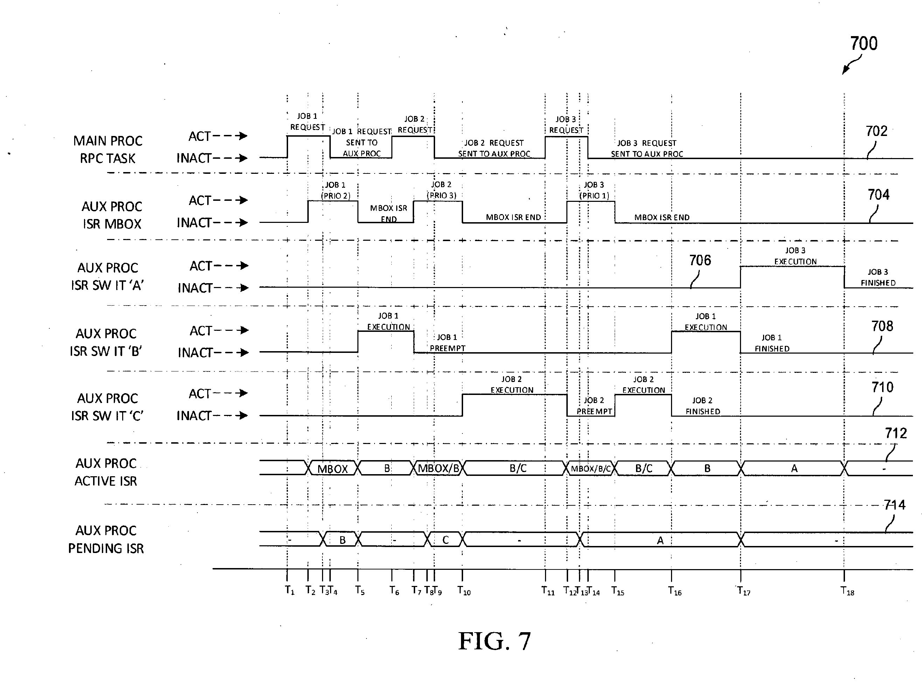

Figure 7 illustrates a timing diagram 700 of an example preemption scheduling for three job priorities. It should be appreciated that the number of priorities is non-limiting, and fewer or greater priority numbers may be contemplated in embodiments using the corresponding number of interrupts.

Figure 7 shows the timing diagram 700 for the main processor RPC task 702, performed by, for example, RPC 306. RPC 306 will receive, sort, and send a function off-load request for each task ('A' OS task, 'B' OS task, and 'C' OS task) from OS 302 to the auxiliary processor 400.

Between time T₁ and T₄, OS 302 solicits RPC 306 to offload a first job (job 1), corresponding with a 'B' OS task, by making the first job request to be executed by auxiliary processor 400. In this example, the first job has a priority level '2'. Between time T₆ and T₉, OS 302 solicits RPC 306 to offload a second job (job 2), corresponding with a 'C' OS task, by making the second job request to be executed by auxiliary processor 400. In this example, the second job has a priority level '3', which has a higher priority than the first job.

Between time T₁₁ and T₁₄, OS 302 solicits RPC 306 to offload a third job (job 3), corresponding with an 'A' OS task, by making the third job request to be executed by auxiliary processor 400. In this example, the third job has a priority level '1', with the lowest priority between the first, second, and third jobs.

At time T₂, RPC 306 sends the first job request to the auxiliary processor 400 using the shared memory 104 and mailbox 114. At time T₇, RPC 306 sends the second job request to the auxiliary processor 400 using the shared memory 104 and mailbox 114. At time T₁₂, RPC 306 sends the third job request to the auxiliary processor 400 using the shared memory 104 and mailbox 114. In each case, the job request is only sent if no other job with the same priority level is already being executed by the auxiliary processor 400. If the auxiliary processor 400 is executing a job with the same priority level, RPC 306 stores the job request and sends it later.

The timing diagram 700 illustrates the auxiliary processor ISR mailbox 704, performed by, for example, ISR mailbox 406. The auxiliary processor 400 is called in when a new job is posted in mailbox 114. A mailbox interrupt signal (interrupt mailbox) has the highest priority within the auxiliary processor 400 and is mapped to the ISR mailbox 406. Mailbox interrupt signal (interrupt mailbox) has the highest priority to allow the management of requests from the main processor 300 and set new interrupt signals for the auxiliary processor 400 to execute the various tasks off-loaded by OS 302.

In embodiments, if a new job has a higher priority than a currently executed job, the new job will be executed directly after the end of the mailbox ISR execution. In embodiments, the preemption mechanism can be controlled to apply only up to a certain priority level by configuring the mailbox interrupt priority on the auxiliary processor 400 (i.e., upper-level interrupts will not be interrupted, while lower-level interrupts will be interrupted). For example, in embodiments, the first five lowest priority levels will be sorted and the execution of the job will be preempted based on the priority level. In contrast, the next priority levels will not be preempted regardless if a job within the next priority level has a higher priority than the job being executed.

At time T₂, ISR mailbox 406 receives a first interrupt signal (mailbox interrupt) corresponding to the first job, with priority level '2'. At time T₅, the first interrupt signal ends.

At time T₇, ISR mailbox 406 receives a second interrupt signal (mailbox interrupt) corresponding to the second job, with priority level '3'. At time T₁₀, the second interrupt signal ends.

Finally, at time T₁₂, ISR mailbox 406 receives a third interrupt signal (mailbox interrupt) corresponding to the third job, with priority level '1'. At time T₁₅, the third interrupt signal ends
ISR mailbox 406 sets a software interrupt (SW IT) based on the job's priority level, to the corresponding ISR SW IT. For example, the ISR SW IT 'A' 706, ISR SW IT
'B' 708, or ISR SW IT 'C' 710 is shown in the timing diagram for each of the ISR SW IT 'A' 408₁, ISR SW IT 'B' 408₂, or ISR SW IT 'C' 408₃, respectively.

Accordingly, at time T₅, ISR SW IT 'B' 408₂ receives the first job with the priority level '2', and the remote procedure execution circuit 410 begins executing the first job. At time T₇, in response to OS 302 offloading the second job with a higher priority level than the first job, the first job is preempted and halted. In embodiments, the preemption is performed by the priority management of NVIC 402.

At time T₁₀, at the end of the second interrupt signal (mailbox interrupt), ISR SW IT 'C' 408₃ receives the second job with the priority level '3', and the remote procedure execution circuit 410 begins executing the second job.

At time T₁₂, in response to the ISR mailbox 406 receiving the third interrupt signal (mailbox interrupt), the second job is temporarily suspended by ISR mailbox 406.

However, as the priority level of the third job is lower than the second job, the remote procedure execution circuit 410 continues with the execution of the second job at time T₁₅. At time T₁₆, the remote procedure execution circuit 410 completes the execution of the second job.

At the end of the execution of the second job at time T₁₆, the first job is executed by the remote procedure execution circuit 410 because it has the next highest-level priority of jobs yet to be executed (i.e., the first job has a higher priority than the third job).

At the end of the execution of the first job at time T₁₇, the third job, with the lowest priority level, is executed by the remote procedure execution circuit 410. At time T₁₈, the execution of the first job is completed.

The auxiliary processor active ISR 712 illustrates the active jobs by the various corresponding ISR SW IT 408 and the ISR mailbox 406. The auxiliary processor pending ISR 714 illustrates the pending jobs by the various corresponding ISR SW IT 408 and the ISR mailbox 406.

Advantageously, embodiments of this disclosure boast several significant advantages over traditional approaches to task handling and processor resource management. One of the key benefits is the remarkably low overhead associated with the scheduling of function calls. Because the system is designed to operate without a conventional operating system (OS) to manage task scheduling, it avoids the complexity and resource consumption typically introduced by such an OS. The absence of an OS, often called "OS-less," results in a leaner system that can operate more efficiently and with greater responsiveness to real-time events. Furthermore, this solution is characterized by a low usage footprint in RAM and ROM, especially when contrasted with multicore systems that employ multithreading real-time operating systems (RTOS). The minimized memory requirement translates into cost savings and allows for the utilization of lower-cost hardware with limited memory resources while still maintaining robust multitasking capabilities.

In terms of hardware architecture, another significant advantage is the minimal wiring required for inter-processor communication. A single wire can facilitate communication between the different processing cores. This streamlined approach reduces potential points of failure, decreases manufacturing complexity, and can translate into improved reliability and reduced cost.

Concerning task management, the proposed embodiments efficiently handle preemption through a well-defined process that allows higher-priority tasks to interrupt and take precedence over lower-priority ones. This ensures critical tasks receive immediate attention and system resources, enhancing the system's responsiveness to urgent processing requirements.

Further, the system adeptly manages the queuing of tasks with the same priority level. By organizing these tasks in a queue, the system guarantees that each task will be addressed orderly following predefined priority rules. This reduces the chances of task starvation and maintains consistent performance even when multiple tasks compete for processor attention.

These advantages demonstrate a sophisticated approach to processor resource management that outperforms conventional solutions in efficiency, cost-effectiveness, and system responsiveness.

A first aspect relates to a method for scheduling preemption in a multi-core system. The multi-core system includes a main processor, an auxiliary processor, and a shared memory between the main processor and the auxiliary processor. The method includes generating, by the main processor during an execution of an operating system, a plurality of task requests, each task request corresponding to a job to be executed by the auxiliary processor and having a respective priority level; storing, by the main processor, the plurality of task requests in the shared memory; selecting, by the main processor, a first task request from the plurality of task requests stored in the shared memory with a highest priority level; communicating, by the main processor, the first task request to the auxiliary processor. The communicating includes communicating the respective priority level of the first task request to the auxiliary processor, storing information related to the first task request in the shared memory, and communicating an interrupt signal to the auxiliary processor as a function of the first task request. The method further includes suspending, by the auxiliary processor, an execution of a current task in response to receiving the interrupt signal; retrieving, by the auxiliary processor, the respective priority level of the first task request; adding, by the auxiliary processor, the first task request and its respective priority level to an execution queue; and executing, by the auxiliary processor, a task from the execution queue having a highest priority.

In a first implementation form of the method according to the first aspect as such, the executing, by the auxiliary processor, the task from the execution queue having the highest priority includes retrieving information related to the task selected from the shared memory.

In a second implementation form of the method according to the first aspect as such or any preceding implementation form of the first aspect, the communicating, by the main processor, the first task request to the auxiliary processor is in response to an availability of a slot in the shared memory.

In a third implementation form of the method according to the first aspect as such or any preceding implementation form of the first aspect, the storing information related to the first task request in the shared memory includes storing the information in a dedicated slot of the shared memory associated with a priority level of the first task request.

In a fourth implementation form of the method according to the first aspect as such or any preceding implementation form of the first aspect, the executing, by the auxiliary processor, the task from the execution queue having the highest priority includes retrieving information related to the task selected from the shared memory, and the retrieving information related to the task selected from the shared memory is in response to determining the dedicated slot of the shared memory associated with the priority level of the task selected.

In a fifth implementation form of the method according to the first aspect as such or any preceding implementation form of the first aspect, the communicating the respective priority level of the first task request to the auxiliary processor includes writing in a register of a mailbox coupled between the main processor and the auxiliary processor; or writing in a dedicated slot of the shared memory.

In a sixth implementation form of the method according to the first aspect as such or any preceding implementation form of the first aspect, the communicating the interrupt signal to the auxiliary processor includes communicating the interrupt signal by the mailbox; or through a direct interrupt line between the main processor and the auxiliary processor.

In a seventh implementation form of the method according to the first aspect as such or any preceding implementation form of the first aspect, the retrieving, by the auxiliary processor, the respective priority level of the first task request from the shared memory includes retrieving, by the auxiliary processor, the respective priority level by reading the register of the mailbox or by reading from the dedicated slot of the shared memory.

A second aspect relates to a multi-core system. The multi-core system includes a non-transitory memory storage comprising instructions and a multi-core processor in communication with the non-transitory memory storage. The multi-core processor includes a main processor, an auxiliary processor, and a shared memory between the main processor and the auxiliary processor. The multi-core processor is configured to execute the instructions to generate, by the main processor during an execution of an operating system, a plurality of task requests, each task request corresponding to a job to be executed by the auxiliary processor and having a respective priority level, store, by the main processor, the plurality of task requests in the shared memory; select, by the main processor, a first task request from the plurality of task requests stored in the shared memory with a highest priority level; communicate, by the main processor, the first task request to the auxiliary processor, wherein the communicating comprises: communicate the respective priority level of the first task request to the auxiliary processor,
store information related to the first task request in the shared memory, and communicate an interrupt signal to the auxiliary processor as a function of the first task request; suspend, by the auxiliary processor, an execution of a current task in response to receiving the interrupt signal; retrieve, by the auxiliary processor, the respective priority level of the first task request; add, by the auxiliary processor, the first task request and its respective priority level to an execution queue; and execute, by the auxiliary processor, a task from the execution queue having a highest priority.

In a first implementation form of the multi-core system according to the second aspect as such, the executing, by the auxiliary processor, the task from the execution queue having the highest priority includes retrieving information related to the task selected from the shared memory.

In a second implementation form of the multi-core system according to the second aspect as such or any preceding implementation form of the second aspect, the communicating, by the main processor, the first task request to the auxiliary processor is in response to an availability of a slot in the shared memory.

In a third implementation form of the multi-core system according to the second aspect as such or any preceding implementation form of the second aspect, the storing information related to the first task request in the shared memory includes storing the information in a dedicated slot of the shared memory associated with a priority level of the first task request.

In a fourth implementation form of the multi-core system according to the second aspect as such or any preceding implementation form of the second aspect, the executing, by the auxiliary processor, the task from the execution queue having the highest priority includes retrieving information related to the task selected from the shared memory and the retrieving information related to the task selected from the shared memory is in response to determining the dedicated slot of the shared memory associated with the priority level of the task selected.

In a fifth implementation form of the multi-core system according to the second aspect as such or any preceding implementation form of the second aspect, the communicating the respective priority level of the first task request to the auxiliary processor includes writing in a register of a mailbox coupled between the main processor and the auxiliary processor; or writing in a dedicated slot of the shared memory.

In a sixth implementation form of the multi-core system according to the second aspect as such or any preceding implementation form of the second aspect, the communicating the interrupt signal to the auxiliary processor includes communicating the interrupt signal by the mailbox; or through a direct interrupt line between the main processor and the auxiliary processor.

In a seventh implementation form of the multi-core system according to the second aspect as such or any preceding implementation form of the second aspect, the retrieving, by the auxiliary processor, the respective priority level of the first task request from the shared memory includes retrieving, by the auxiliary processor, the respective priority level by reading the register of the mailbox or by reading from the dedicated slot of the shared memory.

A third aspect relates to a non-transitory computer-readable media storing computer instructions for scheduling preemption in a multi-core system. The multi-core system includes a main processor, an auxiliary processor, and a shared memory between the main processor and the auxiliary processor, the instructions, when executed by the multi-core system, comprises: generating, by the main processor during an execution of an operating system, a plurality of task requests, each task request corresponding to a job to be executed by the auxiliary processor and having a respective priority level; storing, by the main processor, the plurality of task requests in the shared memory; selecting, by the main processor, a first task request from the plurality of task requests stored in the shared memory with a highest priority level; communicating, by the main processor, the first task request to the auxiliary processor, wherein the communicating comprises: communicating the respective priority level of the first task request to the auxiliary processor,
storing information related to the first task request in the shared memory, and communicating an interrupt signal to the auxiliary processor as a function of the first task request; suspending, by the auxiliary processor, an execution of a current task in response to receiving the interrupt signal; retrieving, by the auxiliary processor, the respective priority level of the first task request; adding, by the auxiliary processor, the first task request and its respective priority level to an execution queue; and executing, by the auxiliary processor, a task from the execution queue having a highest priority.

In a first implementation form of the non-transitory computer-readable media according to the third aspect as such, the executing, by the auxiliary processor, the task from the execution queue having the highest priority includes retrieving information related to the task selected from the shared memory.

In a second implementation form of the non-transitory computer-readable media according to the third aspect as such or any preceding implementation form of the third aspect, the communicating, by the main processor, the first task request to the auxiliary processor is in response to an availability of a slot in the shared memory.

In a second implementation form of the non-transitory computer-readable media according to the third aspect as such or any preceding implementation form of the third aspect, the storing information related to the first task request in the shared memory includes storing the information in a dedicated slot of the shared memory associated with a priority level of the first task request.

The computer-readable non-transitory media includes all types of computer readable media, including magnetic storage media, optical storage media, flash media, and solid-state media. It should be understood that software can be installed in and sold with the multi-core system 100. Alternatively, the software can be obtained and loaded into the multi-core system 100, including obtaining the software through physical medium or distribution system, including, for example, from a server owned by the software creator or from a server not owned but used by the software creator. The software can be stored on a server for distribution over the internet, for example.

Although the description has been described in detail, it should be understood that various changes, substitutions, and alterations may be made without departing from the spirit and scope of this disclosure as defined by the appended claims. The same elements are designated with the same reference numbers in the various figures. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

The specification and drawings are, accordingly, to be regarded simply as an illustration of the disclosure as defined by the appended claims, and are contemplated to cover any and all modifications, variations, combinations, or equivalents that fall within the scope of the present disclosure.

## Claims

1. A method (200, 500, 600) for scheduling preemption in a multi-core system, the multi-core system comprising a main processor (110, 300), an auxiliary processor (112, 400), and a shared memory (104) between the main processor (110, 300) and the auxiliary processor (112, 400), the method (200, 500, 600) comprising:
generating, by the main processor (110, 300) during an execution of an operating system, a plurality of task requests, each task request corresponding to a job to be executed by the auxiliary processor (112, 400) and having a respective priority level;
storing, by the main processor (110, 300), the plurality of task requests in the shared memory (104);
selecting, by the main processor (110, 300), a first task request from the plurality of task requests stored in the shared memory (104) with a highest priority level;
communicating, by the main processor (110, 300), the first task request to the auxiliary processor (112, 400), wherein the communicating comprises:
communicating the respective priority level of the first task request to the auxiliary processor (112, 400),
storing information related to the first task request in the shared memory (104), and
communicating an interrupt signal to the auxiliary processor (112, 400) as a function of the first task request;
suspending, by the auxiliary processor (112, 400), an execution of a current task (304) in response to receiving the interrupt signal;
retrieving, by the auxiliary processor (112, 400), the respective priority level of the first task request;
adding, by the auxiliary processor (112, 400), the first task request and its respective priority level to an execution queue; and
executing, by the auxiliary processor (112, 400), a task (304) from the execution queue having a highest priority.

2. The method (200, 500, 600) of claim 1, wherein executing, by the auxiliary processor (112, 400), the task (304) from the execution queue having the highest priority comprises retrieving information related to the task (304) selected from the shared memory (104).

3. The method (200, 500, 600) of claim 1, wherein the communicating, by the main processor (110, 300), the first task request to the auxiliary processor (112, 400) is in response to an availability of a slot in the shared memory (104).

4. The method (200, 500, 600) of claim 1, wherein storing information related to the first task request in the shared memory (104) comprises storing the information in a dedicated slot of the shared memory (104) associated with a priority level of the first task request.

5. The method (200, 500, 600) of claim 4, wherein executing, by the auxiliary processor (112, 400), the task (304) from the execution queue having the highest priority comprises retrieving information related to the task (304) selected from the shared memory (104), and wherein the retrieving information related to the task (304) selected from the shared memory (104) is in response to determining the dedicated slot of the shared memory (104) associated with the priority level of the task (304) selected.

6. The method (200, 500, 600) of claim 1, wherein the communicating the respective priority level of the first task request to the auxiliary processor (112, 400) comprises:
writing in a register of a mailbox (114) coupled between the main processor (110, 300) and the auxiliary processor (112, 400); or
writing in a dedicated slot of the shared memory (104).

7. The method (200, 500, 600) of claim 6, wherein communicating the interrupt signal to the auxiliary processor (112, 400) comprises:
communicating the interrupt signal by the mailbox (114); or
communicating the interrupt signal through a direct interrupt line between the main processor (110, 300) and the auxiliary processor (112, 400).

8. The method (200, 500, 600) of claim 6, wherein retrieving, by the auxiliary processor (112, 400), the respective priority level of the first task request from the shared memory (104) comprises retrieving, by the auxiliary processor (112, 400), the respective priority level by reading the register of the mailbox (114) or by reading from the dedicated slot of the shared memory (104).

9. A multi-core system, comprising:
a non-transitory memory storage comprising instructions; and
a multi-core processor in communication with the non-transitory memory storage, the multi-core processor comprising a main processor (110, 300), an auxiliary processor (112, 400), and a shared memory (104) between the main processor (110, 300) and the auxiliary processor (112, 400), wherein the multi-core processor is configured to execute the instructions to carry out the method of any of claims 1 to 8.

10. A non-transitory computer-readable media storing computer instructions for scheduling preemption in a multi-core system, the multi-core system comprising a main processor (110, 300), an auxiliary processor (112, 400), and a shared memory (104) between the main processor (110, 300) and the auxiliary processor (112, 400), the computer instructions causing the multi-core system to carry out the method of any of claims 1 to 8.
